# EUROPÄISCHE PATENTSCHRIFT

(11) **EP 1 190 004 B1**
(45) Veröffentlichungstag und Bekanntmachung des Hinweises auf die Patenterteilung: **30.07.2003**
(21) Anmeldenummer: 00929556.9
(22) Anmeldetag: 26.05.2000
(51) Int. Cl.: C09D 201/00, B05D 3/06

(54) **THERMISCH UND MIT AKTINISCHER STRAHLUNG HÄRTBARER BESCHICHTUNGSSTOFF UND SEINE VERWENDUNG**
COATING MATERIAL THAT CAN BE CURED THERMALLY OR BY ACTINIC RADIATION, AND ITS USE
MATERIAU DE REVETEMENT DURCISSABLE THERMIQUEMENT ET PAR RAYONNEMENT ACTINIQUE, ET SON UTILISATION

(30) Priorität: 29.05.1999 DE 19924674
(43) Veröffentlichungstag der Anmeldung: 27.03.2002
(73) Patentinhaber: BASF Coatings AG, 48165 Münster (DE)
(72) Erfinder: MEISENBURG, Uwe, D-47051 Duisburg (DE); RINK, Heinz-Peter, D-48153 Münster (DE); JOOST, Karl-Heinz, D-48317 Drensteinfurt (DE); BAUMGART, Hubert, D-48163 Münster (DE)
(74) Vertreter: Fitzner, Uwe, Dr.
(86) Internationale Anmeldenummer: EP0004807
(87) Internationale Veröffentlichungsnummer: WO00073395

(56) Entgegenhaltungen:
- EP-A- 0 540 884
- EP-A- 0 844 286
- EP-A- 0 940 459
- DE-A- 19 826 715

## Beschreibung

Die vorliegende Erfindung betrifft einen neuen thermisch und mit aktinischer Strahlung härtbaren Beschichtungsstoff. Außerdem betrifft die vorliegende Erfindung die Verwendung des neuen Beschichtungsstoffs für die Herstellung neuer Klarlackierung und farb- und/oder effektgebender Mehrschichtlackierungen für die Automobilerst- und -reparaturlackierung, die industrielle Lackierung, inclusive Coil Coating und Container Coating, die Kunststofflackierung und die Möbellackierung.

Automobilkarosserien, Kunststoffteile für Automobile oder Haushaltsgeräte und industrielle Bauteile werden heutzutage durch eine Klarlackierung geschützt. Hierbei kann die Klarlackierung als alleinige Lackschicht verwendet werden oder die oberste Schicht einer mehrschichtigen Decklackierung bilden.

Insbesondere Automobilkarosserien sind größtenteils mit einem mehrschichtigen Decklackaufbau versehen. Als letzte Überzugsschicht werden häufig Klarlacke aufgetragen. Hierfür kommen die üblichen und bekannten Einkomponenten (1K)-, Zweikomponenten (2K)-, Mehrkomponenten (3K, 4K)- Pulver- oder Pulverslurry-Klarlacke oder UV-härtbare Klarlacke in Betracht.

Einkomponenten(1K)-, Zweikomponenten(2K)- oder Mehrkomponenten(3K, 4K)-Klarlacke werden beispielsweise in den Patentschriften US 5,474,811, US 5,356,669, US 5,605,965, WO 94/10211, WO 94/10212, WO 94/10213, EP 0 594 068 A1, EP 0 594 071 A1, EP 0 594 142 A1, EP 0 604 992 A1, WO 94/22969, EP 0 596 460 A1 oder WO 92/22615 beschrieben.

Pulverklarlacke sind beispielsweise aus der deutschen Patentschrift DE 42 22 194 A1 oder der Produkt-Information der Firma BASF Lacke + Farben AG, "Pulverlacke", 1990 bekannt.

Ein Pulverlack, welcher thermisch und mit aktinischer Strahlung härtbar ist, ist aus der europäischen Patentschrift EP 0 844 286 A1 bekannt. Er enthält ein ungesättigtes Bindemittel und ein zweites hiermit copolymerisierbares Harz sowie einen Photoinitiator und einen thermischen Initiator und ist somit thermisch und mit aktinischer Strahlung härtbar. Allerdings wird dieser Dual Cure-Pulverlack als pigmentierter Decklack verwendet, welcher an der Oberfläche mit UV-Licht und in den substratnahen Bereichen thermisch gehärtet wird. Ob dieser bekannte Pulverlack auch für die Herstellung von Klarlackschichten, insbesondere in Mehrschichtlackierungen tauglich ist, läßt sich der Patentschrift nicht entnehmen.

Bei Pulverslurry-Lacken handelt es sich um Pulverlacke in Form wäßriger Dispersionen. Derartige Slurries sind beispielsweise in der US Patentschrift US 4,268,542 und den deutschen Patentanmeldungen DE 195 18 392.4 A1 und DE 196 13 547 A1 und der nicht vorveröffentlichten deutschen Patentanmeldung DE 198 14 471.7 A1 beschrieben.

UV-härtbare Klarlacke gehen beispielsweise aus den Patentschriften EP 0 540 884 A1, EP 0 568 967 A1 oder US 4,675,234 hervor.

Jeder dieser Klarlacke weist spezifischen Stärken und Schwächen auf. So erhält man mit Hilfe dieser Klarlacke Mehrschichtlackierungen, die den optischen Anforderungen genügen. Indes sind die kratzfesten Einkomponenten(1K)-Klarlacke manchmal nicht genügend witterungsbeständig, wogegen die witterungsbeständigen Zweikomponenten(2K)- oder Mehrkomponenten(3K, 4K)-Klarlacke oftmals nicht genügend kratzfest sind. Manche Einkomponenten(1K)-Klarlacke sind zwar kratzfest und witterungsstabil, weisen aber in Kombination mit häufig angewandten Wasserbasislacken Oberflächenstörungen wie Schrumpf (wrinkling) auf.

Pulverklarlacke, Pulverslurry-Klarlacke und UV-härtbare Klarlacke dagegen weisen eine nicht völlig befriedigende Zwischenschichthaftung auf, ohne daß die Probleme der Kratzfestigkeit oder der Etchbeständigkeit völlig gelöst wären. Insbesondere neigen die UV-härtbaren Klarlacke wegen ihrer starken Schrumpfung bei der Polymerisation ganz besonders zur Enthaftung.

Aus der EP 0 568 967 A1 ist ein Verfahren zur Herstellung von Mehrschichtlackierungen bekannt, bei dem eine thermisch härtbare Klarlackschicht nach dem Naß-in-naß-Verfahren auf eine pigmentierte Basislackschicht aufgetragen wird, wonach die beiden Schichten in der Wärme gemeinsam ausgehärtet werden. Auf die ausgehärtete Klarlackschicht wird anschließend mindestens eine weitere Klarlackschicht auf der Basis von mit aktinischer Strahlung härtbaren Beschichtungsstoffen aufgetragen und mit aktinischer Strahlung oder mit aktinischer Strahlung und thermisch ausgehärtet. Dieses Verfahren liefert Klarlacküberzüge von hoher Chemikalienfestigkeit und optischer Qualität. Indes ist die Kratzfestigkeit nicht befriedigend.

Außerdem geht aus der EP 0 568 967 A1 ein Verfahren hervor, bei dem ein mit aktinischer Strahlung härtbarer Beschichtungsstoff auf die pigmentierte Basislackschicht aufgetragen und ausgehärtet wird. Anschließend wird eine weitere Schicht desselben Beschichtungsstoffs appliziert und mit aktinischer Strahlung gehärtet. Es resultiert zwar eine hochglänzende Oberfläche ohne wahrnehmbare Struktur, indes vergilbt der betreffende Klarlacküberzug. Auch die Kratzfestigkeit läßt nach wie vor zu wünschen übrig.

Aufgabe der vorliegenden Erfindung ist es, einen neuen Beschichtungsstoff bereitzustellen, welcher die Nachteile des Standes der Technik nicht mehr länger aufweist, sondern in einfacher Weise neue Klarlackierungen und farb- und/oder effektgebende Lackierungen liefert, welche beim Einbrennen keine Rückspaltung von Bestandteilen zeigen und kratzfest, witterungsstabil, vergilbungsfrei, hart, flexibel und von Oberflächenstörungen frei sind, auf allen Substraten eine hohe Haftung aufweisen und sich in der für einen hervorragenden optischen Gesamteindruck notwendigen hohen Schichtdicke herstellen lassen.

Demgemäß wurde der neue thermisch und mit aktinischer Strahlung härtbare Beschichtungsstoff, enthaltend
(a1) mindestens einen Bestandteil mit
   (a11) mindestens zwei funktionellen Gruppen, welche der Vernetzung mit aktinischer Strahlung dienen, und
   (a12) mindestens einer funktionellen Gruppe, welche mit den Hydroxylund/oder Thiolgruppen (a21) im Bestandteil (a2) thermische Vernetzungsreaktionen eingehen kann,
(a2) mindestens ein verzweigtes, cyclisches und/oder acyclisches C₉-C₁₆-Alkan, das mit mindestens zwei Hydroxyl- oder Thiolgruppen oder mindestens einer Hydroxyl- und mindestens einer Thiolgruppe (a21) funktionalisiert ist und
(a3) mindestens einen Photoinitiator.

Im folgenden wird der neue thermisch und mit aktinischer Strahlung härtbare Beschichtungsstoff als "erfindungsgemäßer Beschichtungsstoff" bezeichnet.

Im folgenden werden die erfindungsgemäß zu verwendenden verzweigten, cyclischen und/oder acyclischen C₉-C₁₆-Alkane (a2), die mit mindestens zwei Hydroxyl- oder Thiolgruppen oder mindestens einer Hydroxyl- und mindestens einer Thiolgruppe funktionalisiert sind, der Kürze halber als "funktionalisierte Alkane (a2)" bezeichnet.

Darüber hinaus wurden die neuen Klarlackierungen und farb- und/oder effektgebenden Mehrschichtlackierungen gefunden, welche mit Hilfe des erfindungsgemäßen Beschichtungsstoffs hergestellt werden können.

In folgenden werden die neuen Klarlackierungen und farb- und/oder effektgebenden Mehrschichtlackierungen als "erfindungsgemäße Klarlackierung" und "erfindungsgemäße Mehrschichtlackierungen" bezeichnet, und die entsprechenden Verfahren zu ihrer Herstellung werden als "erfindungsgemäße Lackierverfahren" bezeichnet.

Im Rahmen der vorliegenden Erfindung bedeutet der Begriff "thermische Härtung" die durch Hitze initiierte Härtung einer Lackschicht aus einem Beschichtungsstoff, bei der üblicherweise ein separat vorliegendes Vernetzungsmittel angewandt wird. Üblicherweise wird dies von der Fachwelt als Fremdvernetzung bezeichnet. Sind die Vernetzungsmittel in die Bindemittel bereits eingebaut, spricht man auch von Selbstvernetzung. Erfindungsgemäß ist die Fremdvernetzung von Vorteil und wird deshalb bevorzugt angewandt.

Im Rahmen der vorliegenden Erfindung ist unter aktinischer Strahlung Elektronenstrahlung oder vorzugsweise UV-Strahlung zu verstehen. Die Härtung durch UV-Strahlung wird üblicherweise durch radikalische oder kationische Photoinitiatoren initiiert und ist ihrem Mechanismus nach eine radikalische oder kationische Photopolymerisation.

Werden die thermische und die Härtung mit aktinischem Licht bei einem Beschichtungsstoff gemeinsam angewandt, spricht man auch von "Dual Cure".

Im Hinblick auf den Stand der Technik war es überraschend und für den Fachmann nicht vorhersehbar, daß die Aufgabe, welche der Erfindung zugrunde liegt mit Hilfe des erfindungsgemäßen Beschichtungsstoffs, des erfindungsgemäßen Lackierverfahrens und der erfindungsgemäßen Klarlackierungen und Mehrschichtlackierungen gelöst werden konnte.

Besonders überraschend ist, daß aufgrund der Verwendung des erfindungsgemäßen Beschichtungsstoffs erfindungsgemäße Klarlackierungen und Mehrschichtlackierungen resultieren, welche beim Einbrennen keine Rückspaltung von Bestandteilen zeigen und welche nicht nur kratzfest, witterungsstabil, vergilbungsfrei, hart, flexibel und von Oberflächenstörungen frei sind, auf allen Substraten eine hohe Haftung aufweisen und sich in der für einen hervorragenden optischen Gesamteindruck notwendigen hohen Schichtdicke herstellen lassen, sondern auch einen außerordentlich hohen Reflow haben.

Der erfindungsgemäße Beschichtungsstoff enthält mindestens einen Bestandteil (a1) mit mindestens zwei funktionellen Gruppen (a11), welche der Vernetzung mit aktinischer Strahlung dienen.

Beispiele geeigneter funktioneller Gruppen (a11) sind Epoxidgruppen oder olefinisch ungesättigte Doppelbindungen, wie sie in Vinyl-, Allyl-, Cinnamoyl-, Methacryl- oder Acrylgruppen, insbesondere Methacryl- oder Acrylgruppen, vorliegen. Bekanntermaßen werden die Epoxidgruppen für die kationische Photopolymerisation verwendet, wogegen die olefinisch ungesättigten Doppelbindungen in der Hauptsache für die radikalische Photopolymerisation in Betracht kommen. Erfindungsgemäß kann der Bestandteil (a1) Epoxidgruppen und olefinische Doppelbindungen enthalten, so daß er nach beiden Mechanismen der Vernetzung mit aktinischer Strahlung unterworfen werden kann. Es ist indes von Vorteil, ausschließlich olefinisch ungesättigte Doppelbindungen der genannten Art als funktionelle Gruppen (a11) zu verwenden.

Des weiteren enthält der erfindungsgemäß zu verwendende Bestandteil (a1) mindestens eine, vorzugsweise mindestens zwei funktionelle Gruppen (a12), welche mit den Hydroxyl- und/oder Thiolgruppen (a21) des nachstehend beschriebenen Bestandteils (a2) thermische Vernetzungsreaktionen eingehen können.

Beispiele geeigneter funktioneller Gruppen (a12) ergeben sich aus der nachfolgenden Übersicht.

| **Übersicht: Beispiele komplementärer funktioneller Gruppen (a12) und (a22) im** | |
|---|---|
| **Bestandteil (a2)** | **Bestandteil (al)** |
| **Gruppe (a21)** | **Gruppe (a12)** |
| -SH | -C(O)-OH |
| -OH | -C(O)-O-C(O)- |
| | -NCO |
| | -NH-C(O)-OR |
| | -CH₂-OH |
| | -CH₂-O-CH₃ |
| | -NH-C(O)-CH(-C(O)OR)₂ |
| | -NH-C(O)-CH(-C(O)OR)(-C(O)-R) |
| | -NH-C(O)-NR₂ |
| | = Si(OR)₂ |

In der Übersicht bedeuten die Reste R aliphatische, cycloaliphatische, aromatische, aliphatisch-cycloaliphatische, aliphatisch-aromatische oder cycloaliphatisch-aromatische organische Gruppen, welche gegebenenfalls substituiert sind und/oder Heteroatome wie Sauerstoff, Stickstoff und/oder Schwefel enthalten.

Die Auswahl der Gruppen (a21) richtet sich zum einen danach, daß sie keine unerwünschten durch aktinische Strahlung initiierten Reaktionen eingehen oder die Härtung mit aktinischer Strahlung nicht stören oder inhibieren dürfen, und zum anderen danach, in welchem Temperaturbereich die thermische Härtung erfolgen soll. Hierbei ist es, insbesondere im Hinblick auf thermisch sensible Substrate wie Kunststoffe, erfindungsgemäß von Vorteil, einen Temperaturbereich zu wählen, welcher 100 °C, insbesondere 80 °C nicht überschreitet. Im Hinblick auf diese Rahmenbedingungen haben sich Isocyanatgruppen (a12) als vorteilhaft erwiesen, weswegen sie erfindungsgemäß bevorzugt angewandt werden.

Demnach handelt es sich bei dem besonders vorteilhaften Bestandteil (a1) um eine mit aktinischer Strahlung oder thermisch härtbare oligomere oder polymere Verbindung, welche mindestens eine, vorzugsweise mindestens zwei und insbesondere mindestens drei Isocyanatgruppe(n) (a12) und mindestens zwei und insbesondere mindestens drei (Meth)Acrylgruppen (a11) enthält.

Im Rahmen der vorliegenden Erfindung wird unter einer oligomeren Verbindung eine Verbindung verstanden, welche im allgemeinen im Mittel 2 bis 15 sich wiederholende Grundstrukturen oder Monomereinheiten aufweist. Unter einer polymeren Verbindung wird dagegen eine Verbindung verstanden, welche im allgemeinen im Mittel mindestens 10 sich wiederholende Grundstrukturen oder Monomereinheiten aufweist. Verbindungen dieser Art werden von der Fachwelt auch als Bindemittel oder Harze bezeichnet.

Im Unterschied dazu ist im Rahmen der vorliegenden Erfindung unter einer niedermolekularen Verbindung, eine Verbindung zu verstehen, welche sich im wesentlichen nur von einer Grundstruktur oder einer Monomereinheit ableitet. Verbindungen dieser Art werden von der Fachwelt im allgemeinen auch als Reaktivverdünner bezeichnet.

Die als Bestandteil (a1) eingesetzten Polymere bzw. Oligomere weisen üblicherweise ein zahlenmittleres Molekulargewicht von 500 bis 50.000, bevorzugt von 1.000 bis 5.000, auf. Bevorzugt weisen sie ein Doppelbindungsäquivalentgewicht von 400 bis 2.000, besonders bevorzugt von 500 bis 900, auf. Außerdem weisen sie bei 23 °C bevorzugt eine Viskosität von 250 bis 11.000 mPas auf. Vorzugsweise werden sie in einer Menge von 5 bis 90 Gew.-%, besonders beyorzugt 10 bis 80 Gew.-% und insbesondere 15 bis 70 Gew.-%, jeweils bezogen auf die Gesamtmenge des Beschichtungsstoffs angewandt.

Beispiele geeigneter Bestandteile (a1) entstammen den Oligomer- und/oder Polymerklassen der linearen oder verzweigten, insbesonder der verzweigten (meth)acrylfunktionellen (Meth)Acrylcopolymere, Polyetheracrylate, Polyesteracrylate, ungesättigten Polyester, Epoxyacrylate, Urethanacrylate, Aminoacrylate, Melaminacrylate, Silikonacrylate und der entsprechenden Methacrylate. Bevorzugt werden Bindemittel (a1) eingesetzt, die frei von aromatischen Struktureinheiten sind. Bevorzugt werden Urethan(meth)acrylate und/oder Polyester(meth)acrylate, besonders bevorzugt Urethan(meth)acrylate, ganz besonders bevorzugt aliphatische Urethan(meth)acrylate und insbesondere Urethanacrylate, eingesetzt.

Die Urethan(meth)acrylate (a1) werden erhalten durch Umsetzung eines Diisocyanats und/oder Polyisocyanats, insbesondere eines Polyisocyanats, mit einem Kettenverlängerungsmittel aus der Gruppe der Diole/Polyole und/oder Diamine/Polyamine und/oder Dithiole/Polythiole und/oder Alkanolamine und anschließende Umsetzung eines Teils der freien Isocyanatgruppen mit mindestens einem Hydroxyalkyl(meth)acrylat, insbesondere einem Hydroxyalkylacrylat. Gegebenenfalls können noch Hydroxyalkylester anderer ethylenisch ungesättigter Carbonsäuren wie Ethacrylsäure oder Itaconsäure mit verwendet werden.

Die Mengen an Kettenverlängerungsmittel, Di- und/oder Polyisocyanat und Hydroxyalkylester werden dabei bevorzugt so gewählt, daß
1.) das Äquivalentverhältnis der NCO-Gruppen zu den reaktiven Gruppen des Kettenverlängerungsmittels (Hydroxyl-, Amino- bzw. Thiolgruppen) zwischen 20 : 1 und 2 : 1, bevorzugt zwischen 15 : 1 und 5 : 1, liegt und
2.) die OH-Gruppen der Hydroxyalkylester der ethylenisch ungesättigten Carbonsäuren in unterstöchiometrischer Menge in bezug auf die noch freien Isocyanatgruppen des Präpolymeren aus Isocyanat und Kettenverlängerungsmittel vorliegen.

Außerdem ist es möglich, die Urethan(meth)acrylate (a1) herzustellen, indem zunächst ein Teil der Isocyanatgruppen eines Polyisocyanates mit mindestens einem Hydroxyalkylester umgesetzt wird und ein Teil der restlichen Isocyanatgruppen anschließend mit einem Kettenverlängerungsmittel umgesetzt werden. Auch in diesem Fall werden die Mengen an Kettenverlängerungsmittel, Isocyanat und Hydroxyalkylester so gewählt, daß das Äquivalentverhältnis der NCO-Gruppen zu den reaktiven Gruppen des Kettenverlängerungsmittels zwischen 20 : 1 und 2 : 1, bevorzugt zwischen 15 : 1 und 5 : 1 liegt und das Äquivalentverhältnis der restlichen NCO-Gruppen zu den OH-Gruppen des Hydroxyalkylesters mehr als 1 beträgt.

Selbstverständlich sind auch sämtliche Zwischenformen dieser beiden Verfahren möglich.

Insgesamt ist darauf zu achten, daß das Verhältnis von Isocyanatgruppen zu isocyanatreaktiven Gruppen so hoch ist, daß das resultierende Urethan(meth)acrylat (a1) über die gewünschte Anzahl an Isocyanatgruppen (a12) verfügt.

Erfindungsgemäß enthält das Urethan(meth)acrylat (a1) im Mittel mindestens eine, vorzugsweise mindestens zwei Isocyanatgruppe(n) (a12). Besondere Vorteile resultieren, wenn im Mittel mehr als zwei, ganz besonders bevorzugt mehr als drei Isocyanatgruppen (a12) vorhanden sind. Die Anzahl der Isocyanatgruppen (a12) pro braucht im Mittel sechs nicht zu übersteigen, um die erfindungsgemäßen Vorteile zu erzielen. Indes erweisen sich in speziellen Fällen auch im Mittel mehr als sechs Isocyanatgruppen (a12) pro Urethan(meth)acrylat (a1) als vorteilhaft.

Besondere Vorteile resultieren, wenn der Bestandteil (a1), insbesondere das Urethan(meth)acrylat (a1), einen Gehalt an Isocyanatgruppen (a12) von 7 bis 20 Gew.-%, besonders bevorzugt 8 bis 18 Gew.-% und insbesondere 9 bis 16 Gew.-%, jeweils bezogen auf den Bestandteil (a1), aufweist.

Beispiele geeigneter Di- und/oder Polyisocyanate sind die nachstehend bei dem Vernetzungsmittel (a7) beschriebenen. Zu Zwecken der Herstellung des Bestandteils (a1), insbesondere des Urethan(meth)acrylats (a1), sind die dort beschriebenen Isocyanuratgruppen enthaltenden Polyisocyanurate von besonderem Vorteil und werden deshalb besonders bevorzugt verwendet.

Der erfindungsgernäße Beschichtungsstoff enthält des weiteren die funktionalisierten Alkane (a2).

Die funktionalisierten Alkane (a2) leiten sich ab von verzweigten, cyclischen oder acyclischen Alkanen mit 9 bis 16 Kohlenstoffatomen, welche jeweils das Grundgerüst bilden.

Beispiele geeigneter Alkane dieser Art mit 9 Kohlenstoffatomen sind 2-Methyloctan, 4-Methyloctan, 2,3-Dimethyl-heptan, 3,4-Dimethyl-heptan, 2,6-Dimethyl-heptan, 3,5-Dimethyl-heptan, 2-Methyl-4-ethyl-hexan oder Isopropylcyclohexan.

Beispiele geeigneter Alkane dieser Art mit 10 Kohlenstoffatomen sind 4-Ethyloctan, 2,3,4,5-Tetramethyl-hexan, 2,3-Diethyl-hexan oder 1-Methyl-2-npropyl-cyclohexan.

Beispiele geeigneter Alkane dieser Art mit 11 Kohlenstoffatomen sind 2,4,5,6-Tetramethyl-heptan oder 3-Methyl-6-ethyl-octan.

Beispiele geeigneter Alkane dieser Art mit 12 Kohlenstoffatomen sind 4-Methyl-7-ethyl-nonan, 4,5-Diethyl-octan, 1'-Ethyl-butyl-cyclohexan, 3,5-Diethyl-octan oder 2 ,4-Diethyl-octan.

Beispiele geeigneter Alkane dieser Art mit 13 Kohlenstoffatomen sind 3,4-Dimethyl-5-ethyl-nonan oder 4,6-Dimethyl-5-ethyl-nonan.

Ein Beispiel eines geeigneten Alkans dieser Art mit 14 Kohlenstoffatomen ist 3,4-Dimethyl-7-ethyl-decan.

Beispiele geeigneter Alkane dieser Art mit 15 Kohlenstoffatomen sind 3,6-Diethyl-undecan oder 3,6-Dimethyl-9-ethyl-undecan.

Beispiele geeigneter Alkane dieser Art mit 16 Kohlenstoffatomen sind 3,7-Diethyl-dodecan oder 4-Ethyl-6-isopropyl-undecan.

Von diesen Grundgerüsten sind die Alkane mit 10 bis 14 und insbesondere 12 Kohlenstoffatomen besonders vorteilhaft und werden deshalb bevorzugt verwendet. Von diesen sind wiederum die Octanderivate ganz besonders vorteilhaft.

Für die vorliegende Erfindung ist es vorteilhaft, wenn die funktionalisierten Alkane (a2), welche sich von diesen verzweigten, cyclischen oder acyclischen Alkanen als Grundgerüsten ableiten, bei Raumtemperatur flüssig sind. Somit können entweder einzelne flüssige funktionalisierte Alkane (a2) verwendet werden oder flüssige Gemische dieser Verbindungen. Dies ist insbesondere dann der Fall, wenn funktionalisierte Alkane (a2) verwendet werden, welche wegen ihrer hohen Anzahl an Kohlenstoffatomen im Alkan-Grundgerüst als einzelne Verbindungen fest sind. Der Fachmann kann daher die entsprechenden funktionalisierten Alkane (a2) in einfacher Weise auswählen.

Für die Erfindung ist es außerdem vorteilhaft, daß die funktionalisierten Alkane (a2) einen Siedepunkt von über 200, vorzugsweise 220 und insbesondere 240 °C aufweisen. Darüberhinaus sollen sie eine niedrige Verdampfungsrate haben.

Für die erfindungsgemäßen Beschichtungsstoffe ist es von Vorteil, wenn die funktionalisierten Alkane (a2) acyclisch sind.

Die funktionalisierten Alkane (a2) weisen primäre und/oder sekundäre Hydroxylund/oder Thiolgruppen auf. Für die erfindungsgemäßen Beschichtungsstoffe ist es von Vorteil, wenn primäre und sekundäre Gruppen dieser Art in einer Verbindung vorhanden sind.

Bei den funktionalisierten Alkanen (a2) handelt es sich demnach um Polyole, Polythiole oder um Polyol-polythiole (a2), insbesondere aber Polyole (a2). Diese Verbindungen können einzeln oder gemeinsam als Gemische verwendet werden. Besondere Vorteil ergeben sich, wenn die Polyole (a2) Diole und/oder Triole, insbesondere aber Diole sind. Sie werden deshalb ganz besonders bevorzugt verwendet.

Ganz besonders vorteilhafte erfindungsgemäße Beschichtungsstoffe werden erhalten, wenn die Polyole (a2) stellungsisomere Dialkyloctandiole, insbesondere Diethyloctandiole, sind. Herausragende Ergebnisse werden mit 2,4-Diethyl-octandiol-1,5 erzielt.

Die vorstehend beschriebenen funktionalisierten Alkane (a2) sind an sich bekannte Verbindungen und können mit Hilfe üblicher und bekannter Synthesemethoden der Organischen Chemie wie die basenkatalysierte Aldolkondensation hergestellt werden oder sie fallen als Nebenprodukte chemischer Großsynthesen wie der Herstellung von 2-Ethyl-hexanol an.

Die funktionalisierten Alkane (a2) sind im allgemeinen in den erfindungsgemäßen Beschichtungsstoffen in einer Menge von 5 bis 60 Gew.-%, bezogen auf die Gesamtmenge des jeweiligen Beschichtungsstoffs, enthalten. Zwar können sie hierin in größeren Mengen enthalten sein, indes handelt es sich um einen vorteilhaften Bereich, innerhalb dessen die erfindungsgemäßen Vorteile sicher und zuverlässig erzielt werden. Innerhalb dieses Bereichs ist derjenige von 10 bis 50 Gew.-% von besonderem Vorteil, weil die erfindungsgemäßen Beschichtungsstoffe, welche diese Menge an funktionalisierten Alkanen (a2) enthalten, ein besonders vorteilhaftes Eigenschaftsprofil aufweisen. Ganz besondere Vorteile resultieren indes aus der Verwendung von 15 bis 40 Gew.-% an funktionalisierten Alkanen (a2).

In dem erfindungsgemäßen Beschichtungsstoff kann das Verhältnis von Isocyanatgruppen (a12) zu den isocyanatreaktiven Gruppen (a21) breit variieren. Es richtet sich insbesondere danach, welche technischen Effekte hinsichtlich der erfindungsgemäßen Klarlackierung und Mehrschichtlackierung erzielt werden sollen. Erfindungsgemäß ist es von Vorteil, wenn das Verhältnis (a12)/(a21) zwischen 2 : 1 und 1 : 2, besonders bevorzugt 1,5 : 1 und 1 : 1,5 liegt.

Der erfindungsgemäß zu verwendende Beschichtungsstoff enthält mindestens einen Photoinitiator (a3), Wenn der Beschichtungsstoff bzw. die Klarlackschicht mit UV-Strahlung vernetzt werden soll, ist die Verwendung eines Photoinitiators (a3) im allgemeinen notwendig. Er ist in dem Beschichtungsstoff bevorzugt in Anteilen von 0,1 bis 10 Gew.-%, 1 bis 8 Gew.-% und insbesondere 2 bis 6 Gew.-%, jeweils bezogen auf die Gesamtmenge des Beschichtungsstoffs, enthalten.

Beispiele geeigneter Photoinitiatoren (a3) sind solche vom Norrish II-Typ, deren Wirkungsmechanismus auf einer intramolekularen Variante der Wasserstoff-Abstraktionsreaktionen beruht, wie sie in vielfältiger Weise bei photochemischen Reaktionen auftreten (beispielhaft sei hier auf Römpp Chemie Lexikon, 9. erweiterte und neubearbeitete Auflage, Georg Thieme Verlag Stuttgart, Bd. 4, 1991, verwiesen) oder kationische Photoinitiatoren (beispielhaft sei hier auf Römpp Lexikon »Lacke und Druckfarben« Georg Thieme Verlag Stuttgart, 1998, Seiten 444 bis 446, verwiesen), insbeondere Benzophenone, Benzoine oder Benzoinether oder Phosphinoxide. Es können auch beispielsweise die im Handel unter den Namen Irgacure® 184, Irgacure® 1800 und Irgacure® 500 der Firma Ciba Geigy, Grenocure® MBF der Firma Rahn und Lucirin® TPO der Firma BASF AG erhältlichen Produkte eingesetzt werden.

Neben den Photoinitiatoren (a3) können übliche Sensibilisatoren (a3) wie Anthracen in wirksamen Mengen verwendet werden.

Des weiteren kann der Beschichtungsstoff mindestens einen Initiator der thermischen Vernetzung (a4) enthalten. Diese bilden ab 80 bis 120 °C Radikale, welche die Vernetzungsreaktion starten. Beispiele für thermolabile radikalische Initiatoren sind organische Peroxide, organische Azoverbindungen oder C-C-spaltende Initiatoren wie Dialkylperoxide, Peroxocarbonsäuren, Peroxodicarbonate, Peroxidester, Hydroperoxide, Ketonperoxide, Azodinitrile oder Benzpinakolsilylether. C-C-spaltende Initiatoren sind besonders bevorzugt, da bei ihrer thermischen Spaltung keine gasförmigen Zersetzungprodukte gebildet werden, die zu Störungen in der Lackschicht führen könnten. Sofern sie mit verwendet werden, liegen ihre Mengen im allgemeinen zwischen 0,1 bis 10 Gew.-%, vorzugsweise 0,5 bis 8 Gew.-% und insbesondere 1 bis 5 Gew.-%, jeweils bezogen auf die Gesamtmenge des Beschichtungsstoffs.

Darüber hinaus kann der Beschichtungsstoff mindestens einen mit aktinischer Strahlung und/oder thermisch härtbaren Reaktivverdünner (a5) enthalten.

Beispiele geeigneter thermisch vernetzbarer Reaktiverdünner (a5) sind oligomere Polyole, welche aus oligomeren Zwischenprodukten, die durch Metathesereaktionen von acyclischen Monoolefinen und cyclischen Monoolefinen gewonnen werden, durch Hydroformylierung und anschließender Hydrierung erhältlich sind; Beispiele geeigneter cyclischer Monoolefine sind Cyclobuten, Cyclopenten, Cyclohexen, Cycloocten, Cyclohepten, Norbonen oder 7-Oxanorbonen; Beispiele geeigneter acyclischer Monoolefine sind in Kohlenwasserstoffgemischen enthalten, die in der Erdölverarbeitung durch Cracken erhalten werden (C₅-Schnitt); Beispiele geeigneter, erfindungsgemäß zu verwendender oligomerer Polyole weisen eine Hydroxylzahl (OHZ) von 200 bis 450, ein zahlenmittleres Molekulargewicht Mn von 400 bis 1000 und ein massenmittleres Molekulargewicht Mw von 600 bis 1100 auf;

Weitere Beispiele geeigneter thermisch vernetzbarer Reaktiverdünner (a5) sind hyperverzweigte Verbindungen mit einer tetrafunktionellen Zentralgruppe, abgeleitet von Ditrimethylolpropan, Diglycerin, Ditrimethylolethan, Pentaerythrit, Tetrakis(2-hydroxyethyl)methan, Tetrakis(3-hydroxypropyl)methan oder 2,2-Bishydroxymethyl-butandiol-(1,4) (Homopentaerythrit). Die Herstellung dieser Reaktivverdünner kann nach den üblichen und bekannten Methoden der Herstellung hyperverzweigter und dendrimerer Verbindungen erfolgen. Geeignete Synthesemethoden werden beispielsweise in den Patentschriften WO 93/17060 oder WO 96/12754 oder in dem Buch von G. R. Newkome, C. N. Moorefield und F. Vögtle, "Dendritic Molecules, Concepts, Syntheses, Perspectives", VCH, Weinheim, New York, 1996, beschrieben.

Weitere Beispiele geeigneter Reaktivverdünner (a5) sind Polycarbonatdiole, Polyesterpolyole, Poly(meth)acrylatdiole oder hydroxylgruppenhaltige Polyadditionsprodukte.

Beispiele geeigneter reaktiver Lösemittel, welche als Reaktiverdünner (a5) verwendet werden können, sind Butylglykol, 2-Methoxypropanol, n-Butanol, Methoxybutanol, n-Propanol, Ethylenglykolmonomethylether, Ethylenglykolmonoethylether, Ethylenglykolmonobutylether, Diethylenglykolmonomethylether, Diethylenglykolmonoethyl-ether, Diethylenglykoldiethylether, Diethylenglykolmo-nobutylether, Trimethylolpropan, 2-Hydroxypropionsäureethylester oder 3-Methyl-3-methoxybutanol sowie Derivate auf Basis von Propylenglykol, z.B. Ethoxyethylpropionat, Isopropoxypropanol oder Methoxypropylacetat genannt.

Als Reaktiwerdünner (a5), welche mit aktinischer Strahlung vernetzt werden können, werden beispielsweise (Meth)Acrylsäure und deren Ester, Maleinsäure und deren Ester bzw. Halbester, Vinylacetat, Vinylether, Vinylhamstoffe u.ä. eingesetzt. Als Beispiele seien Alkylenglykoldi(meth)acrylat, Polyethylenglykoldi(meth)acrylat, 1,3-Butandioldi(meth)acrylat, Vinyl(meth)acrylat, Allyl(meth)acrylat, Glycerin-tri(meth)acrylat, Trimethylolpropantri(meth)acrylat, Trimethylolpropandi(meth)acrylat, Styrol, Vinyltoluol, Divinylbenzol, Pentaerythrittri(meth)acrylat, Pentaerythrittetra(meth)acrylat, Dipropylenglykoldi(meth)acrylat, Hexandioldi(meth)acrylat, Ethoxyethoxyethylacrylat, N-Vinylpyrrolidon, Phenoxyethylacrylat, Dimethylaminoethylacrylat, Hydroxyethyl(meth)acrylat, Butoxyethylacrylat, Isobornyl(meth)acrylat, Dimethylacrylamid und Dicyclopentylacrylat, die in der EP 0 250 631 A1 beschriebenen, langkettigen linearen Diacrylate mit einem Molekulargewicht von 400 bis 4000, bevorzugt von 600 bis 2500. Beispielsweise können die beiden Acrylatgruppen durch eine Polyoxibutylenstruktur getrennt sein. Einsetzbar sind außerdem 1,12-Dodecyldiacrylat und das Umsetzungsprodukt von 2 Molen Acrylsäure mit einem Mol eines Dimerfettalkohols, der im allgemeinen 36 C-Atome aufweist. Geeignet sind auch Gemische der genannten Monomeren.

Bevorzugt werden als Reaktivverdünner (a5) Mono- und/oder Diacrylate, wie z.B. Isobornylacrylat, Hexandioldiacrylat, Tripropylenglykoldiacrylat, Laromer® 8887 der Firma BASF AG und Actilane® 423 der Firma Akcros Chemicals Ltd., GB, eingesetzt. Besonders bevorzugt werden Isobornylacrylat, Hexandioldiacrylat und Tripropylenglykoldiacrylat eingesetzt.

Sofern sie mit verwendet werden, werden die Reaktiwerdünner (a5) in einer Menge von vorzugsweise 2 bis 70 Gew.-%, besonders bevorzugt 10 bis 65 Gew.-% und insbesondere 15 bis 50 Gew.-%, jeweils bezogen auf die Gesamtmenge des Beschichtungsstoffs, angewandt.

Darüber hinaus kann der Beschichtungsstoff mindestens ein übliches und bekanntes Lackadditiv (a6) in wirksamen Mengen, d.h. in Mengen vorzugsweise bis zu 40 Gew.-%, besonders bevorzugt bis zu 30 Gew.-% und insbesondere bis zu 20 Gew.-%, jeweils bezogen auf die Gesamtmenge des Beschichtungsstoffs, enthalten.

Beispiele geeigneter Lackadditive (a6) sind
- UV-Absorber;
- Lichtschutzmittel wie HALS-Verbindungen, Benztriazole oder Oxalanilide;
- Radikalfänger;
- Katalysatoren für die Vernetzung wie Dibutylzinndilaurat oder Lithiumdecanoat;
- Slipadditive;
- Polymerisationsinhibitoren;
- Entschäumer;
- Emulgatoren, insbesondere nicht ionische Emulgatoren wie alkoxylierte Alkanole und Polyole, Phenole und Alkylphenole oder anionische Emulgatoren wie Alkalisalze oder Ammoniumsalze von Alkancarbonsäuren, Alkansulfonsäuren, und Sulfosäuren von alkoxylierten Alkanolen und Polyolen, Phenolen und Alkylphenolen;
- Netzmittel wie Siloxane, fluorhaltige Verbindungen, Carbonsäurehalbester, Phosphorsäureester, Polyacrylsäuren und deren Copolymere oder Polyurethane;
- Haftvermittler wie Tricyclodecandimethanol;
- Verlaufmittel;
- filmbildende Hilfsmittel wie Cellulose-Derivate;
- transparente Füllstoffe wie pyrogenes Siliziumdioxid oder Nanopartikel auf der Basis von Siliziumdioxid; ergänzend wird noch auf das Römpp Lexikon »Lacke und Druckfarben« Georg Thieme Verlag, Stuttgart, 1998, Seiten 250 bis 252, verwiesen;
- Flammschutzmittel und/oder
- Mattierungsmittel.

Weitere Beispiele geeigneter Lackadditive (a6) werden in dem Lehrbuch »Lackadditive« von Johan Bieleman, Wiley-VCH, Weinheim, New York, 1998, beschrieben.

Nicht zuletzt kann der Beschichtungsstoff mindestens einen thermisch härtbaren Bestandteil (a7) in untergeordneten Mengen enthalten. Im Rahmen der vorliegenden Erfindung sind unter "untergeordneten Mengen" Mengen zu verstehen, welche die Dual Cure-Eigenschaften des Beschichtungsstoffs nicht nachteilig beeinflussen, sondern in vorteilhafter Weise variieren und ergänzen. Sofem sie mit verwendet werden, soll ihr Anteile an dem Beschichtungsstoff im allgemeinen 40 Gew.-%, vorzugsweise 35 Gew.-% und insbesondere 30 Gew.-% nicht überschreiten.

Beispiele geeigneter Bestandteile (a7) sind die von den thermisch härtbaren Beschichtungsstoffen her bekannten Bindemittel und Vernetzungsmittel.

Beispiele geeigneter Bindemittel (a7) sind lineare und/oder verzweigte und/oder blockartig, kammartig und/oder statistisch aufgebaute Poly(meth)acrylate oder Acrylatcopolymerisate, Polyester, Alkyde, Aminoplastharze, Polyurethane, Polylactone, Polycarbonate, Polyether, Epoxidharz-Amin-Addukte, (Meth)Acrylatdiole, partiell verseifte Polyvinylester oder Polyharnstoffe, von denen die Acrylatcopolymerisate, die Polyester, die Polyurethane, die Polyether und die Epoxidharz-Amin-Addukte vorteilhaft sind.

Geeignete Bindemittel (a7) werden beispielsweise unter den Handelsnamen Desmophen® 650, 2089, 1100, 670, 1200 oder 2017 von der Firma Bayer, unter den Handelsnamen Priplas oder Pripol® von der Firma Uniqema, unter den Handelsnamen Cempol® Polyester oder Polyacrylat-Polyol von der CCP, unter den Handelsnamen Crodapol® 0-85 oder 0-86 von der Firma Croda oder unter dem Handelsnamen Formrez® ER417 von der Firma Witco vertrieben.

Beispiele geeigneter Vernetzangsmittel (a7) sind blockierte Di- und/oder Polyisocyanate.

Beispiele geeigneter Di- und/oder Polyisocyanate für die Herstellung der blockierten Derivate (a7) sind organische Polyisocyanate, insbesondere sogenannte Lackpolyisocyanate, mit aliphatisch, cycloaliphatisch, araliphatisch und/oder aromatisch gebundenen, freien Isocyanatgruppen. Bevorzugt werden Polyisocyanate mit 2 bis 5 Isocyanatgruppen pro Molekül und mit Viskositäten von 100 bis 10.000, vorzugsweise 100 bis 5000 und insbesondere 1000 bis 2000 mPas (bei 23 °C) eingesetzt. Gegebenenfalls können den Polyisocyanaten noch geringe Mengen organisches Lösemittel, bevorzugt 1 bis 25 Gew.-%, bezogen auf reines Polyisocyanat, zugegeben werden, um so die Einarbeitbarkeit des Isocyanates zu verbessern und gegebenenfalls die Viskosität des Polyisocyanats auf einen Wert innerhalb der obengenannten Bereiche abzusenken. Als Zusatzmittel geeignete Lösemittel die Polyisocyanate sind beispielsweise Ethoxyethylpropionat, Amylmethylketon oder Butylacetat. Außerdem können die Polyisocyanate in üblicher und bekannter Weise hydrophil oder hydrophob modifiziert sein.

Beispiele für geeignete Polyisocyanate sind beispielsweise in "Methoden der organischen Chemie", Houben-Weyl, Band 14/2, 4. Auflage, Georg Thieme Verlag, Stuttgart 1963, Seite 61 bis 70, und von W. Siefken, Liebigs Annalen der Chemie, Band 562, Seiten 75 bis 136, beschrieben. Beispielsweise geeignet sind isocyanatgruppenhaltige Polyurethanpräpolymere, die durch Reaktion von Polyolen mit einem Überschuß an Polyisocyanaten hergestellt werden können und die bevorzugt niederviskos sind.

Weitere Beispiele geeigneter Polyisocyanate sind Isocyanurat-, Biuret-, Allophanat-, Iminooxadiazindon-, Urethan-, Harnstoff- und/oder Uretdiongruppen aufweisende Polyisocyanate. Urethangruppen aufweisende Polyisocyanate werden beispielsweise durch Umsetzung eines Teils der Isocyanatgruppen mit Polyolen, wie z.B. Trimethylolpropan und Glycerin, erhalten. Vorzugsweise werden aliphatische oder cycloaliphatische Polyisocyanate, insbesondere Hexamethylendiisocyanat, dimerisiertes und trimerisiertes Hexamethylendiisocyanat, Isophorondiisocyanat, 2-Isocyanatopropylcyclohexylisocyanat, Dicyclohexylmethan-2,4'-diisocyanat, Dicyclohexylmethan-4,4'-diisocyanat oder 1,3-Bis(isocyanatomethyl)cyclohexan, Diisocyanate, abgeleitet von Dimerfettsäuren, wie sie unter der Handelsbezeichnung DDI 1410 von der Firma Henkel vertrieben werden, 1,8-Diisocyanato-4-isocyanatomethyl-oktan, 1,7-Diisocyanato-4-isocyanatomethylheptan oder 1-Isocyanato-2-(3-isocyanatopropyl)cyclohexan oder Mischungen aus diesen Polyisocyanaten eingesetzt.

Ganz besonders bevorzugt werden Gemische aus Uretdion- und/oder Isocyanuratgruppen und/oder Allophanatgruppen aufweisenden Polyisocyanaten auf Basis von Hexamethylendüsocyanat, wie sie durch katalytische Oligomerisierung von Hexamethylendiisocyanat unter Verwendung von geeigneten Katalysatoren entstehen, eingesetzt. Der Polyisocyanatbestandteil kann im übrigen auch aus beliebigen Gemischen der beispielhaft genannten freien Polyisocyanate bestehen.

Beispiele für geeignete Blockierungsmittel sind die aus der US-Patentschrift US 4,444,954 bekannten Blockierungsmittel wie
i) Phenole wie Phenol, Cresol, Xylenol, Nitrophenol, Chlorophenol, Ethylphenol, t-Butylphenol, Hydroxybenzoesäure, Ester dieser Säure oder 2,5- di-tert.-Butyl-4-hydroxytoluol;
ii) Lactame, wie ε-Caprolactam, δ-Valerolactam, γ-Butyrolactam oder β-Propiolactam;
iii) aktive methylenische Verbindungen, wie Diethylmalonat, Dimethylmalonat, Acetessigsäureethyl- oder -methylester oder Acetylaceton;
iv) Alkohole wie Methanol, Ethanol, n-Propanol, Isopropanol, n-Butanol, Isobutanol, t-Butanol, n-Amylalkohol, t-Amylalkohol, Laurylalkohol. Ethylenglykolmonomethylether, Ethylenglykolmonoethylether, Ethylenglykolmonobutylether, Diethylenglykolmonomethylether, Diethylenglykolmonoethylether, Propylenglykolmonomethylether, Methoxymethanol, Glykolsäure, Glykolsäureester, Milchsäure, Milchsäureester, Methylolhamstoff, Methylolmelamin, Diacetonalkohol, Ethylenchlorohydrin, Ethylenbromhydrin, 1,3-Dichloro-2-propanol, 1,4-Cyclohexyldimethanol oder Acetocyanhydrin;
v) Mercaptane wie Butylmercaptan, Hexyhnercaptan, t-Butylmercaptan, t-Dodecylmercaptan, 2-Mercaptobenzothiazol, Thiophenol, Methylthiophenol oder Ethylthiophenol;
vi) Säureamide wie Acetoanilid, Acetoanisidinamid, Acrylamid, Methacrylamid, Essigsäureamid, Stearinsäureamid oder Benzamid;
vii) Imide wie Succinimid, Phthalimid oder Maleimid;
vüi) Amine wie Diphenylamin, Phenylnaphthylamin, Xylidin, N-Phenylxylidin, Carbazol, Anilin, Naphthylamin, Butylamin, Dibutylamin oder Butylphenylamin;
ix) Imidazole wie Imidazol oder 2-Ethylimidazol;
x) Harnstoffe wie Harnstoff, Thiobamstoff, Ethylenharnstoff, Ethylenthioharnstoff oder 1,3-Diphenylharnstoff;
xi) Carbamate wie N-Phenylcarbamidsäurephenylester oder 2-Oxazolidon;
xii) Imine wie Ethylenimin;
xiii) Oxime wie Acetonoxim, Formaldoxim, Acetaldoxim, Acetoxim, Methylethylketoxim, Diisobutylketoxim, Diacetylmonoxim, Benzophenonoxim oder Chlorohexanonoxime;
xiv) Salze der schwefeligen Säure wie Natriumbisulfit oder Kaliumbisulfit;
xv) Hydroxamsäureester wie Benzylmethacrylohydroxamat (BMH) oder Allylmethacrylohydroxamat; oder
xvi) substituierte Pyrazole, Ketoxime, Imidazole oder Triazole; sowie

Gemische dieser Blockierungsmittel, insbesondere Dimethylpyrazol und Triazole, Malonester und Acetessigsäureester oder Dimethylpyrazol und Succinimid.

Als Vernetzungsmittel (a7) können auch Tris(alkoxycarbonylamino)triazine der allgemeinen Formel 5 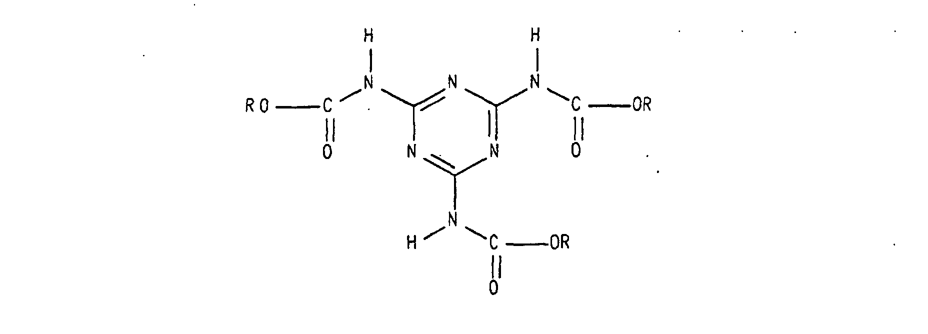 eingesetzt werden.

Beispiele geeigneter Tris(alkoxycarbonylamino)triazine (a7) werden in den Patentschriften US 4,939,213, US 5,084,541 oder der EP 0 624 577 A1 beschrieben. Insbesondere werden die Tris(methoxy-, Tris(butoxy- und/oder Tris(2-ethylhexoxycarbonylamino)triazine verwendet.

Von Vorteil sind die Methyl-Butyl-Mischester, die Butyl-2-Ethylhexyl-Mischester und die Butylester. Diese haben gegenüber dem reinen Methylester den Vorzug der besseren Löslichkeit in Polymerschmelzen und neigen auch weniger zum Auskristallisieren.

Insbesondere sind Aminoplastharze, beispielsweise Melaminharze, als Vernetzungsmittel (a7) verwendbar. Hierbei kann jedes für transparente Decklacke oder Klarlacke geeignete Aminoplastharz oder eine Mischung aus solchen Aminoplastharzen verwendet werden. Insbesondere kommen die üblichen und bekannten Aminoplastharze in Betracht, deren Methylol- und/oder Methoxymethylgruppen z. T. mittels Carbamat- oder Allophanatgruppen defunktionalisiert sind. Vernetzungsmittel dieser Art werden in den Patentschriften US 4,710,542 und EP 0 245 700 B1 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben. Überdies können die Aminoplastharze auch als Bindemittel (a11) in der Basisfarbe (A1) verwendet werden.

Weitere Beispiele geeigneter Vernetzungsmittel (a7) sind beta-Hydroxyalkylamide wie N,N,N',N'-Tetrakis(2-hydroxyethyl)adipamid oder N,N,N',N'-Tetrakis(2-hydroxypropyl)-adipamid.

Weitere Beispiele geeigneter Vernetzungsmittel (a7) sind Siloxane, insbesondere Siloxane mit mindestens einer Trialkoxy- oder Dialkoxysilangruppe.

Weitere Beispiele geeigneter Vernetzungsmittel (a7) sind Polyanhydride, insbsondere Polysuccinsäureanhydrid.

Ansonsten kann der erfindungsgemäße Beschichtungsstoff organische Lösemittel (a8) enthalten, welche nicht mit Isocyanatgruppen reagieren. Als Lösemittel dieser Art sind insbesondere Ester, Ketone, Ketoester, Glykolether wie Ethylen-, Propylen- oder Butylenglykolether, Glykolester wie Ethylen-, Propylen- oder Butylenglykolester oder Glykoletherester wie Ethoxyethylpropionat und Isopropoxypropanol geeignet. Außerdem kommen aliphatische und aromatische Lösemittel wie Dipenten, Xylol oder Shellsol^{R} in Betracht.

Der erfindungsgemäß zu verwendende Beschichtungsstoff kann in unterschiedlichen Formen vorliegen.

So kann er bei entsprechender Wahl seiner vorstehend beschriebenen Bestandteile als flüssiger Beschichtungsstoff vorliegen, welcher im wesentlichen frei von organischen Lösemitteln ist. Indes kann es sich bei dem Beschichtungsstoff um eine Lösung oder Dispersion der vorstehend beschriebenen Bestandteile in organischen Lösemitteln (a8) handeln. Es ist ein weiterer Vorteil des erfindungsgemäßen Beschichtungsstoffs, daß hierbei Feststoffgehalte bis zu mehr als 80 Gew.-%, bezogen auf den Beschichtungsstoff, eingestellt werden können.

Des weiteren kann der Beschichtungsstoff bei entsprechender Wahl seiner vorstehend beschriebenen Bestandteile ein Pulverklarlack sein. Zu diesem Zweck wird der Bestandteil (a1) vorteilhafterweise mikroverkapselt. Dieser Pulverklarlack kann dann gegebenenfalls in Wasser dispergiert werden, wodurch ein Pulverslurry-Klarlack resultiert.

Vorteilhafterweise ist der erfindungsgemäße Beschichtungsstoff ein Zwei- oder Mehrkomponentensystem, bei dem zumindest der Bestandteil (a1) getrennt von den übrigen Bestandteilen gelagert und erst kurz vor der Verwendung zu diesen hinzugegeben wird. In diesem Falle kann der erfindungsgemäße Beschichtungsstoff auch wäßrig sein, wobei der Bestandteil (a1) vorzugsweise in einer ein Lösemittel (a8) enthaltenden Komponente vorliegt.

Der erfindungsgemäße Beschichtungsstoff dient der Herstellung der erfindungsgemäßen Klarlackierungen und Mehrschichtlackierungen auf grundierten oder ungrundierten Substraten.

Als Substrate kommen hierbei alle zu lackierenden Oberflächen, die einer kombinierten Härtung unter Anwendung von Hitze und aktinischer Strahlung zugänglich sind, in Betracht, das sind z. B. Metalle, Kunststoffe, Holz, Keramik, Stein, Textil, Leder, Glas, Glasfasern, Glas- und Steinwolle, mineral- und harzgebundene Baustoffe, wie Gips- und Zementplatten oder Dachziegel. Demnach ist der erfindungsgemäße Beschichtungsstoff auch für Anwendungen außerhalb der Automobillackierung geeignet, insbesondere für die Lackierung von Möbeln und die industrielle Lackierung, inklusive Coil Coating und Container Coating. Im Rahmen der industriellen Lackierungen eignet er sich für die Lackierung praktisch aller Teile für den privaten oder industriellen Gebrauch wie Radiatoren, Haushaltsgeräte, Kleinteile aus Metall, Radkappen oder Felgen.

Mit dem erfindungsgemäßen Beschichtungsstoff können insbesondere auch grundierte oder nicht grundierte Kunststoffe wie z. B. ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) lackiert werden. Die zu lackierenden Kunststoffe können selbstverständlich auch Polymerblends, modifizierte Kunststoffe oder faserverstärkte Kunststoffe sein. Er kann auch für die Beschichtung von üblicherweise im Fahrzeugbau, insbesondere Kraftfahrzeugbau, eingesetzten Kunststoffe zum Einsatz kommen. Im Falle von nichtfunktionalisierten und/oder unpolaren Substratoberflächen können diese vor der Beschichtung in bekannter Weise einer Vorbehandlung, wie mit einem Plasma oder mit Beflammen, unterzogen werden.

Hierbei kann im Rahmen des erfindungsgemäßen Lackierverfahrens eine oder mehrere Klarlackschicht(en) appliziert werden. Werden mehrere Klarlackschichten appliziert, können erfindungsgemäße Beschichtungsstoffe unterschiedlicher stofflicher Zusammensetzung verwendet werden. In den allermeisten Fällen wird indes das angestrebte Eigenschaftsprofil der erfindungsgemäßen Klarlackierungen und Mehrschichtlackierungen mit einer Klarlackschicht erzielt.

Die Klarlackschicht wird in einer Naßschichtdicke aufgetragen, daß nach der Aushärtung in den fertigen erfindungsgemäßen Klarlackierungen und Mehrschichtlackierungen eine Trockenschichtdicke der Versiegelung von 10 bis 100, vorzugsweise 15 bis 75, besonders bevorzugt 20 bis 55 und insbesondere 20 bis 35µm resultiert.

Die Applikation des erfindungsgemäßen Beschichtungsstoffs zum Zwecke der Herstellung der Klarlackschicht kann durch alle üblichen Applikationsmethoden, wie z.B. Spritzen, Rakeln, Streichen, Gießen, Tauchen oder Walzen erfolgen. Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air - Heißspritzen. Die Applikation kann bei Temperaturen von max. 70 bis 80 °C durchgeführt werden, so daß geeigneter Applikationsviskositäten erreicht werden, ohne daß bei der kurzzeitig einwirkenden thermischen Belastung eine Veränderung oder Schädigungen des Beschichtungsstoffs und seines gegebenenfalls wiederaufzubereitenden Overspray eintreten. So kann das Heißspritzen so ausgestaltet sein, daß der Beschichtungsstoffnur sehr kurz in der oder kurz vor der Spritzdüse erhitzt wird.

Die für die Applikation verwendete Spritzkabine kann beispielsweise mit einem gegebenenfalls temperierbaren Umlauf betrieben werden, der mit einem geeigneten Absorptionsmedium für den Overspray, z. B. dem erfindungsgemäßen Beschichtungsstoff selbst; betrieben wird.

Bevorzugt wird die Applikation bei Beleuchtung mit sichtbarem Licht einer Wellenlänge von über 550 µm oder unter Lichtausschluß durchgeführt. Hierdurch werden eine stoffliche Änderung oder Schädigung des Beschichtungsstoffs und des Overspray vermieden.

Selbstverständlich können die vorstehend beschriebenen Applikationsmethoden auch bei der Herstellung der Basislackierung der erfindungsgemäßen Mehrschichtlackierungen im Rahmen des erfindungsgemäßen Lackierverfahrens angewandt werden.

Erfindungsgemäß wird die Klarlackschicht nach ihrer Applikation thermisch und mit aktinischer Strahlung ausgehärtet.

Die Aushärtung kann nach einer gewissen Ruhezeit erfolgen. Sie kann eine Dauer von 30 s bis 2 h, vorzugsweise 1 min bis 1 h und insbesondere 1 min bis 30 min haben. Die Ruhezeit dient beispielsweise zum Verlauf und zur Entgasung der Klarlackschicht oder zum Verdunsten von flüchtigen Bestandteilen wie Lösemittel, Wasser oder Kohlendioxid, wenn der Beschichtungsstoff mit überkritischem Kohlendioxid als Lösemittel appliziert worden ist. Die Ruhezeit kann durch die Anwendung erhöhter Temperaturen bis 80 °C unterstützt und/oder verkürzt werden, sofern hierbei keine Schädigungen oder Veränderungen der Klarlackschicht eintreten, etwa eine vorzeitige Vernetzung.

Erfindungsgemäß erfolgt die Aushärtung mit aktinischer Strahlung mit UV-Strahlung oder Elektronenstrahlen. Gegebenenfalls kann sie mit aktinischer Strahlung von anderen Strahlenquellen durchgeführt oder ergänzt werden. Im Falle von Elektronenstrahlen wird vorzugsweise unter Inertgasatmosphäre gearbeitet. Dies kann beispielsweise durch Zuführen von Kohlendioxid und/oder Stickstoff direkt an die Oberfläche der Klarlackschicht gewährleistet werden.

Auch im Falle der Härtung mit UV-Strahlung kann, um die Bildung von Ozon zu vermeiden, unter Inertgas gearbeitet werden.

Für die Härtung mit aktinischer Strahlung werden die üblichen und bekannten Strahlenquellen und optischen Hilfsmaßnahmen angewandt. Beispiele geeigneter Strahlenquellen sind Quecksilberhoch- oder -niederdruckdampflampen, welche gegebenenfalls mit Blei dotiert sind, um ein Strahlenfenster bis zu 385 µm zu öffnen, oder Elektronenstrahlquellen. Deren Anordnung ist im Prinzip bekannt und kann den Gegebenheiten des Werkstücks und der Verfahrensparameter angepaßt werden. Bei kompliziert geformten Werkstücken, wie sie für Automobilkarosserien vorgesehen sind, können die nicht direkter Strahlung zugänglichen Bereiche (Schattenbereiche) wie Hohlräume, Falzen und anderen konstruktionsbedingte Hinterschneidungen mit Punkt-, Kleinflächen- oder Rundumstrahlern verbunden mit einer automatischen Bewegungseinrichtung für das Bestrahlen von Hohlräumen oder Kanten (partiell) ausgehärtet werden.

Das Substrat kann bei der Härtung der hierauf befindlichen Schicht(en) aus dem erfindungsgemäßen Beschichtungsstoff mit aktinischer Strahlung ruhen oder an der Strahlungsquelle mit einer geeigneten Geschwindigkeit vorbeigeführt werden. Wird das Substrat bewegt, erweist sich eine Vortriebsgeschwindigkeit im Bereich von von 1 bis 10 m/min, besonders bevorzugt 2 bis 8m/min und insbesondere 3 bis 6 m/min als vorteilhaft. Vorzugsweise weisen hierbei die UV-Lampen 100 bis 200 w/cm, besonders bevorzugt 120 bis 190 w/cm und insbesondere 140 bis 180 w/cm auf. Unabhängig davon, ob das Substrat bewegt wird oder ruht, erweist sich eine Strahlungsdosis im Bereich von 500 bis 5.000 mJ/cm², besonders bevorzugt von 1.000 bis 4.500 mJ/cm² und insbesondere von 1.500 bis 4.000 mJ/cm² als vorteilhaft.

Die Anlagen und Bedingungen diese Härtungsmethoden werden beisppielsweise in R. Holmes, U.V. and E.B. Curing Formulations for Printing Inks, Coatings and Paints, SITA Technology, Academic Press, London, United Kindom 1984, beschrieben.

Hierbei kann die Aushärtung stufenweise erfolgen, d. h. durch mehrfache Belichtung oder Bestrahlung mit aktinischer Strahlung. Dies kann auch alternierend erfolgen, d. h., daß abwechselnd mit UV-Strahlung und Elektronenstrahlung gehärtet wird.

Auch die thermische Härtung weist keine methodischen Besonderheiten auf, sondern erfolgt nach den üblichen und bekannten Methoden wie Erhitzen in einem Umluftofen oder Bestrahlen mit IR-Lampen. Wie bei der Härtung mit aktinischer Strahlung kann auch die thermische Härtung stufenweise erfolgen. Vorteilhafterweise erfolgt die thermische Härtung bei einer Temperatur von 50 bis 100 °C, besonders bevorzugt 80 bis 100 °C und insbesondere 90 bis 100 °C während einer Zeit von 1 min bis zu 2 h, besonders bevorzugt 2 min bis zu 1 h und insbesondere 3 bis 30 min. Werden Substrate verwendet, welche thermisch stark belastbar sind, kann die thermische Vernetzung auch bei Temperaturen oberhalb 100 °C durchgeführt werden. Im allgemeinen empfiehlt es sich, hierbei Temperaturen von 180 °C, vorzugsweise 160 °C und insbesondere 140 °C nicht zu überschreiten.

Die thermische Härtung und Härtung mit aktinischer Strahlung werden zusammen angewandt. Dabei können diese Methoden gleichzeitig oder alternierend eingesetzt werden. Werden die beiden Härtungsmethoden alternierend verwendet, kann beispielsweise mit der thermischen Härtung begonnen und mit der Härtung mit aktinischer Strahlung geendet werden. In anderen Fällen kann es sich als vorteilhaft erweisen, mit der Härtung mit aktinischer Strahlung zu beginnen und hiermit zu enden. Der Fachmann kann die Härtungsmethode, welche für den jeweiligen Einzelfall am vorteilhaftesten ist aufgrund seines allgemeinen Fachwissens gegebenenfalls unter Zuhilfenahme einfacher Vorversuche ermitteln. In den allermeisten Fällen erweist es sich als vorteilhaft, zunächst die Härtung mit aktinischer Strahlung und anschließend die thermische Härtung durchzuführen.

Die erfindungsgemäßen Klarlackierungen können auch Bestandteil der erfindungsgemäßen Mehrschichtlackierungen sein.

Zu diesem Zweck wird der erfindungsgemäße Beschichtungsstoff nach dem erfindungsgemäßen Lackierverfahren nicht auf die grundierten oder ungrundierten Substrate, sondern auf mindestens eine hierauf befindliche farb- und/oder effektgebende Basislackschicht aus einem thermisch sowie gegebenenfalls mit aktinischer Strahlung härtbaren pigmentierten Beschichtungsstoff appliziert.

Erfindungsgemäß ist es von Vorteil, die erfindungsgemäßen Beschichtungsstoffe nach dem Naß-in-naß-Verfahren auf die getrocknete oder abgelüftete, indes nicht ausgehärtete Basislackschicht aufzutragen, wonach die resultierende Klarlackschicht und die Basislackschicht gemeinsam thermisch und mit aktinischer Strahlung gehärtet werden.

Als Beschichtungsstoff für die Herstellung der Basislackschicht kommen die üblichen und bekannten Basislacke, insbesondere Wasserbasislacke, in Betracht.

Beispiele geeigneter Wasserbasislacke sind aus den Patentschriften EP 0 089 497 A1, EP 0 256 540 A1, EP 0 260 447 A1, EP 0 297 576 A1, WO 96/12747, EP 0 523 610 A1, EP 0 228 003 A1, EP 0 397 806 A1, EP 0 574 417 A1, EP 0 531 510 A1, EP 0 581 211 A1, EP 0 708 788 A1, EP 0 593 454 A1, DE 43 28 092 A1, EP 0 299 148 A1, EP 0 394 737 A1, EP 0 590 484 A1, EP 0 234 362 A1, EP 0 234 361 A1, EP 0 543 817 A1, WO 95/14721, EP 0 521 928 A1, EP 0 522 420 A1, EP 0 522 419 A1, EP 0 649 865 A1, EP 0 536 712 A1, EP 0 596 460 A1, EP 0 596 461 A1, EP 0 584 818 A1, EP 0 669 356 A1, EP 0 634 431 A1, EP 0 678 536 A1, EP 0 354 261 A1, EP 0 424 705 A1, WO 97/49745, WO 97/49747, EP 0 401 565 A1, EP 0 730 613 B1 oder WO 95/14721 bekannt.

Die erfindungsgemäßen Klarlackierungen und Mehrschichtlackierungen weisen eine gute Kratzfestigkeit, Zwischenschichthaftung, Witterungsstabilität und Chemikalienstabilität, ein hervorragendes optisches Eigenschaftsprofil sowie einen außerordentlich hohen Reflow auf.

### Beispiel 1

### Die Herstellung einer erfindungsgemäßen Mehrschichtlackierung

Auf mit einem handelsüblichen Elektrotauchlack kathodisch beschichteten Stahltafeln (Elektrotauchlackierung mit einer Schichtdicke von 18 - 22 µm) wurden mit einer Becherpistole zunächst ein handelsüblicher Füller von BASF Coatings AG appliziert und eingebrannt. Es resultierte eine Füllerschicht mit einer Schichtdicke von 35 bis 40 µm. Anschließend wurde auf den Füller in gleicher Weise zu Zwecken der besseren Beurteilung der optischen Eigenschaften der erfindungsgemäßen Klarlackschicht ein schwarzer Wasserbasislack der Firma BASF Coatings AG appliziert und während 10 min bei 80 °C vorgetrocknet. Der Wasserbasislack wurde hierbei in einer Naßschichtdicke appliziert, daß nach seiner vollständigen Aushärtung eine Trockenschichtdicke von 13,5 bis 15 µm resultierte.

Auf die Basislackschicht wurde naß-in-naß ein thermisch und mit aktinischer Strahlung härtbarer Beschichtungsstoff in einer Naßschichtdicke appliziert, daß nach der vollständigen Aushärtung der Klarlackschicht eine Schichtdicke von 35 µm resultierte. Der Beschichtungsstoff bestand aus 136 Gewichtsteilen eines aliphatischen Urethanacrylats auf der Basis des Isocyanurats von Hexamethylendiisocyanat, welches 12,5 Gew.-% Isocyanatgruppen enthielt und einer mittlere Funktionalität bezüglich der Acrylatgruppen von 3,5 aufwies, 47,9 Gewichtsteilen 2,4- Diethyloctandiol-1,5, 13,6 Gewichtsteile eines handelsüblichen Photoinitiators (Irgacure® 184 der Firma CIBA AG), 1,36 Gewichtsteilen eines handelsüblichen Verlaufmittels auf Siliconbasis, 1,36 Gewichtsteile eines handelsüblichen Entschäumers (BYK® 020 der Firma Byk) und 20 Gewichtsteile Butylacetat.

Die resultierende Basislack- und Klarlackschicht wurden nach einer Ruhezeit von 6 min bei 50 °C mit UV-Strahlung (3.000 mJ/cm²) gehärtet und anschließend während 45 min bei 160 °C eingebrannt.

Die Haftung der erfindungsgemäßen Mehrschichtlackierung wurde nach 24 Stunden Lagerung bei Raumtemperatur nach dem Gitterschnittest nach DIN 53151 (2 mm) [Note 0 bis 5] ermittelt. Es erfolgte keine Enthaftung: Note GT0.

Die Kratzfestigkeit der Mehrschichtlackierung auf den Prüftafeln wurde nach zweiwöchiger Lagerung bei Raumtemperatur mit Hilfe des in Fig. 2 auf Seite 28 des Artikels von P. Betz und A. Bartelt, Progress in Organic Coatings, 22 (1993), Seiten 27 - 37, beschriebenen BASF-Bürstentests, der allerdings bezüglich des verwendeten Gewichts (2000 g statt der dort genannten 280 g) abgewandelt wurde, folgendermaßen beurteilt:

Bei dem Test wurde die Lackoberfläche mit einem Siebgewebe, welches mit einer Masse belastet wurde, geschädigt. Das Siebgewebe und die Lackoberfläche wurden mit einer Waschmittel-Lösung reichlich benetzt. Die Prüftafel wurde mittels eines Motorantriebs in Hubbewegungen unter dem Siebgewebe vor- und zurückgeschoben.

Der Prüfkörper war mit Nylon-Siebgewebe (Nr. 11, 31 µm Maschenweite, Tg 50 °C) bespanntes Radiergummi (4,5 x 2,0 cm, breite Seite senkrecht zur Kratzrichtung). Das Auflagegewicht betrugt 2000 g.

Vor jeder Prüfung wurde das Siebgewebe erneuert, dabei war die Laufrichtung der Gewebemaschen parallel zur Kratzrichtung. Mit einer Pipette wurde ca. 1 ml einer frisch aufgerührten 0,25%igen Persil-Lösung vor dem Radiergummi aufgebracht. Die Umdrehungszahl des Motors wurde so eingestellt, daß in einer Zeit von 80 s 80 Doppelhübe ausgeführt würden. Nach der Prüfung wurde die verbleibende Waschflüssigkeit mit kaltem Leitungswasser abgespült und die Prüftafel mit Druckluft trockengeblasen. Gemessen wurde der Glanz nach DIN 67530 vor und nach Beschädigung (Meßrichtung senkrecht zur Kratzrichtung), wobei die folgenden Ergebnisse erhalten wurden:

| | |
|---|---|
| Ausgangsglanz: | 86 |
| Glanz nach Belastung: Glanz nach zweistündiger | 63 |
| Lagerung bei 60 °C: | 83 |

Die Ergebnisse belegen die gute Kratzfestigkeit und den außerordentlich hohen Reflow der erfindungsgemäßen Mehrschichtlackierung.

In ihrer Chemikalienbeständigkeit entsprach die erfindungsgemäße Mehrschichtlackierung den Mehrschichtlackierungen, welche Mithilfe von üblichen und bekannten Zweikomponenten(2K)-Klarlacken hergestellt wurden.

## Patentansprüche

1. Thermisch und mit aktinischer Strahlung härtbarer Beschichtungsstoff, enthaltend
(a1) mindestens einen Bestandteil mit
(a11) mindestens zwei funktionellen Gruppen, welche der Vernetzung mit aktinischer Strahlung dienen, und
(a12) mindestens einer funktionellen Gruppe, welche mit den Hydroxylund/oder Thiolgruppen (a21) im Bestandteil (a2) thermische Vernetzungsreaktionen eingehen kann,
(a2) mindestens ein verzweigtes, cyclisches und/oder acyclisches C₉-C₁₆-Alkan, das mit mindestens zwei Hydroxyl- oder Thiolgruppen oder mindestens einer Hydroxyl- und mindestens einer Thiolgruppe (a21) funktionalisiert ist
und
(a3) mindestens einen Photoinitiator,

2. Der Beschichtungsstoff nach Anspruch 1, **dadurch gekennzeichnet, daß** er zusätzlich eine oder mehrere der Komponenten
(a4) mindestens einen Initiator der thermischen Vernetzung,
(a5) mindestens einen mit aktinischer Strahlung und/oder thermisch härtbaren Reaktiwerdünner,
(a6) mindestens ein Lackadditiv,
(a7) mindestens einen thermisch härtbaren Bestandteil und/oder
(a8) mindestens ein organisches Lösemittel
enthält.

3. Der Beschichtungsstoff nach Anspruch 1 oder 2, **dadurch gekennzeichnet, daß** es sich bei den funktionellen Gruppen (a11) um olefinisch ungesättigte Gruppen und/oder Epoxidgruppen, insbesondere olefinisch ungesättigte Gruppen, und bei den funktionellen Gruppen (a12) um Isocyanatgruppen handelt.

4. Der Beschichtungsstoff nach einem der Ansprüche 1 bis 3, **dadurch gekennzeichnet, daß** es sich bei dem Bestandteil (a1) um ein Urethan(meth)acrylat und/oder Polyester(meth)acrylat handelt.

5. Der Beschichtungsstoff nach einem der Ansprüche 1 bis 4, **dadurch gekennzeichnet, daß** das funktionalisierte Alkan (a2) bei Raumtemperatur flüssig ist.

6. Der Beschichtungsstoff nach einem der Ansprüche 1 bis 5, **dadurch gekennzeichnet, daß** das funktionalisierte Alkan (a2) einen Siedepunkt von über 200 °C hat.

7. Der Beschichtungsstoff nach einem der Ansprüche 1 bis 6, **dadurch gekennzeichnet, daß** das funktionalisierte Alkan (a2) acyclisch ist.

8. Der Beschichtungsstoff nach einem der Ansprüche 1 bis 7, **dadurch gekennzeichnet, daß** das funktionalisierte Alkan (a2) primäre und/oder sekundäre, insbesondere primäre und sekundäre, Hydroxyl- und/oder Thiolgruppen aufweist.

9. Der Beschichtungsstoff nach einem der Ansprüche 1 bis 8, **dadurch gekennzeichnet, daß** es sich bei dem funktionalisierten Alkan (a2) um ein Polyol (a2) handelt.

10. Der Beschichtungsstoff nach Anspruch 9, **dadurch gekennzeichnet, daß** die Polyole (a2) Diole und/oder Triole (a2) sind.

11. Der Beschichtungsstoff nach Anspruch 10, **dadurch gekennzeichnet, daß** die Polyole (a2) stellungsisomere Dialkyloctandiole, insbesondere Diethyloctandiole, sind.

12. Der Beschichtungsstoff nach Anspruch 11, **dadurch gekennzeichnet, daß** das Polyol (a2) 2,4-Diethyl-octandiol-1,5 enthält oder hieraus besteht.

13. Die Verwendung des Beschichtungsstoffs gemäß einem der Ansprüche 1 bis 12 in der Kraftfahrzeugserienlackierung, der Kraftfahrzeugreparaturlackierung, der Kunststofflackierung, der Möbellackierung und der industriellen Lackierung, inklusive Coil Coatings und Container Coatings zur Herstellung von Klarlackschichten und von farb- und/oder effektgebenden Mehrschichtlackierungen.

14. Die Verwendung des Beschichtungsstoffs gemäß einem der Ansprüche 1 bis 12 zur Herstellung einer Klarlackierung oder einer farb- und/oder effektgebenden Mehrschichtlackierung, wobei man mindestens eine Klarlackschicht aus einem mit aktinischer Strahlung und thermisch härtbaren Beschichtungsstoff gemäß einem der Ansprüche 1 bis 12 auf die Oberfläche eines grundierten oder ungrundierten Substrats oder naß-in-naß auf die Oberfläche einer Basislackschicht appliziert und gegebenenfalls gemeinsam mit der Basislackschicht aushärtet.

## Claims

1. A coating material curable thermally and with actinic radiation, comprising
(a1) at least one constituent containing
(a11) at least two functional groups which serve for crosslinking with actinic radiation, and
(a12) at least one functional group which is able to undergo thermal crosslinking reactions with the hydroxyl and/or thiol groups (a21) in the constituent (a2),
(a2) at least one branched, cyclic and/or acyclic C₉-C₁₆ alkane functionalized with at least two hydroxyl or thiol groups or with at least one hydroxyl and at least one thiol group (a21),
and
(a3) at least one photoinitiator.

2. The coating material as claimed in claim 1, **characterized in that** it additionally comprises one or more of the components
(a4) at least one thermal crosslinking initiator,
(a5) at least one reactive diluent curable thermally and/or with actinic radiation,
(a6) at least one coatings additive,
(a7) at least one thermally curable constituent, and/or
(a8) at least one organic solvent.

3. The coating material as claimed in claim 1 or 2, **characterized in that** said functional groups (a11) comprise olefinically unsaturated groups and/or epoxide groups, especially olefinically unsaturated groups, and said functional groups (a12) comprise isocyanate groups.

4. The coating material as claimed in one of claims 1 to 3, **characterized in that** said constituent (a1) comprises a urethane (meth)acrylate and/or polyester (meth)acrylate.

5. The coating material as claimed in any of claims 1 to 4, **characterized in that** the functionalized alkane (a2) is liquid at room temperature.

6. The coating material as claimed in any of claims 1 to 5, **characterized in that** the functionalized alkane (a2) has a boiling point of over 200°C.

7. The coating material as claimed in any of claims 1 to 6, **characterized in that** the functionalized alkane (a2) is acyclic.

8. The coating material as claimed in any of claims 1 to 7, **characterized in that** the functionalized alkane (a2) contains primary and/or secondary, especially primary and secondary, hydroxyl and/or thiol groups.

9. The coating material as claimed in any of claims 1 to 8, **characterized in that** the functionalized alkane (a2) is a polyol (a2).

10. The coating material as claimed in claim 9, **characterized in that** the polyols (a2) are diols and/or triols (a2).

11. The coating material as claimed in claim 10, **characterized in that** the polyols (a2) are positionally isomeric dialkyloctanediols, especially diethyloctanediols.

12. The coating material as claimed in claim 11, **characterized in that** the polyol (a2) consists of or comprises 2,4-diethyl-1,5-octanediol.

13. The use of the coating material as claimed in any of claims 1 to 12 in automotive OEM finishing, automotive refinish, the coating of plastics, the coating of furniture, and industrial coating, including coil coatings and container coatings, for the production of clearcoats and of multicoat color and/or effect coating systems.

14. The use of the coating material as claimed in any of claims 1 to 12 for producing a clearcoat or a multicoat color and/or effect coating system, where at least one clearcoat film of a coating material as claimed in any of claims 1 to 12 curable thermally and with actinic radiation is applied to the surface of the primed or unprimed substrate or wet-on-wet to the surface of a basecoat film and is cured together, where appropriate, with the basecoat film.

## Revendications

1. Matériau de revêtement apte à durcir thermiquement et sous l'action d'un rayonnement actinique, et qui contient:
(a1) au moins un composant qui présente
(a11) au moins deux groupes fonctionnels qui permettent la réticulation par le rayonnement actinique et
(a12) au moins un groupe fonctionnel qui peut participer à des réactions de réticulation thermique avec les groupes hydroxyle et/ou thiol (a21) du composant (a2),
(a2) au moins un alcane ramifié, cyclique et/ou acyclique en C₉ à C₁₆, qui est fonctionnalisé par au moins deux groupes hydroxyle ou thiol ou au moins un groupe hydroxyle et au moins un groupe thiol (a21) et
(a3) au moins un photo-initiateur.

2. Matériau de revêtement selon la revendication 1, **caractérisé en ce qu'**il contient en outre un ou plusieurs des composants ci-dessous :
(a4) au moins un initiateur de réticulation thermique,
(a5) au moins un diluant réactif apte à durcir sous l'action d'un rayonnement actinique et/ou thermiquement,
(a6) au moins un additif de peinture,
(a7) au moins un composant apte à durcir thermiquement et/ou
(a8) au moins un solvant organique.

3. Matériau de revêtement selon la revendication 1 ou 2, **caractérisé en ce que** les groupes fonctionnels (a11) sont des groupes oléfiniquement insaturés et/ou des groupes époxy, en particulier des groupes oléfiniquement insaturés, les groupes fonctionnels (a12) étant des groupes isocyanate.

4. Matériau de revêtement selon l'une des revendications 1 à 3, **caractérisé en ce que** le composant (a1) est un (méth)acrylate d'uréthane et/ou un poly(méth)acrylate d'ester.

5. Matériau de revêtement selon l'une des revendications 1 à 4, **caractérisé en ce que** l'alcane fonctionnalisé (a2) est liquide à température ambiante.

6. Matériau de revêtement selon l'une des revendications 1 à 5, **caractérisé en ce que** l'alcane fonctionnalisé (a2) a un point d'ébullition supérieur à 200°C.

7. Matériau de revêtement selon l'une des revendications 1 à 6, **caractérisé en ce que** l'alcane fonctionnalisé (a2) est acyclique.

8. Matériau de revêtement selon l'une des revendications 1 à 7, **caractérisé en ce que** l'alcan fonctionnalisé (a2) présente des groupes hydroxyle et/ou thiol primaires et/ou secondaires et en particulier primaires et secondaires.

9. Matériau de revêtement selon l'une des revendications 1 à 8, **caractérisé en ce que** l'alcane fonctionnalisé (a2) est un polyol (a2).

10. Matériau de revêtement selon la revendication 9, **caractérisé en ce que** les polyols (a2) sont des diols et/ou des triols (a2).

11. Matériau de revêtement selon la revendication 10, **caractérisé en ce que** les polyols (a2) sont des dialkyloctanediols à isomérie de position et en particulier des diéthyloctanediols à isomérie de position.

12. Matériau de revêtement selon la revendication 11, **caractérisé en ce que** le polyol (a2) contient du 2,4-diéthyl-octanediol-1,5 ou en est constitué.

13. Utilisation du matériau de revêtement selon l'une des revendications 1 à 12 dans la peinture de véhicules automobiles de série, la peinture de réparation de véhicules automobiles, la peinture de matières synthétiques, la peinture de meubles et la peinture industrielle, notamment la peinture de tôles en bobines et la peinture de conteneurs, pour la réalisation de couches de vernis transparent et de peintures en plusieurs couches colorées et/ou à effet optique.

14. Utilisation du matériau de revêtement selon l'une des revendications 1 à 12 pour la réalisation d'une couche de vernis transparent ou d'une peinture en plusieurs couches colorées et/ou à effet optique, dans laquelle on applique sur la surface d'un support, revêtue ou non d'une couche de fond, une couche de vernis transparent constitué d'un matériau de revêtement apte à durcir thermiquement et sous l'action d'un rayonnement actinique selon l'une des revendications 1 à 12, ou on l'applique par voie humide sur la surface d'une couche de peinture de fond et on effectue le durcissement le cas échéant avec la couche de peinture de fond.
